(19) Europäisches Patentamt
European Patent Office
Office européen des brevets

(11) **EP 3 751 948 A2**

(12) **EUROPEAN PATENT APPLICATION**

(43) Date of publication:
**16.12.2020   Bulletin 2020/51**

(51) Int Cl.:
***H04W 74/08*** (2009.01)

(21) Application number: **20179608.3**

(22) Date of filing: **12.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2019   US 201962861331 P**

(71) Applicant: **Industrial Technology Research Institute**
**31040 Hsinchu (TW)**

(72) Inventors:
• SHEU, Chorng-Ren
  Hsinchu City 300 (TW)
• TSAI, Hua-Lung
  Taipei City 104 (TW)
• CHOU, Ching-Chun
  Taipei City 114 (TW)
• HU, Heng-Ming
  Taoyuan City 320 (TW)

(74) Representative: **Becker, Eberhard**
**Becker & Kurig Partnerschaft**
**Patentanwälte PartmbB**
**Bavariastrasse 7**
**80336 München (DE)**

(54) **RADIO RESOURCE SENSING AND SELECTING METHOD USED BY MOBILE DEVICE FOR WIRELESS COMMUNICATION AND MOBILE DEVICE USING THE SAME**

(57)    The disclosure is directed to a radio resource sensing and selecting method used by a mobile device for wireless communication and a mobile device using the same. In an exemplary embodiment, the disclosure is directed to a resource sensing and selecting method used by a UE newly entering a network and operating under NR V2X mode 2. The method includes not limited to: receiving aperiodic data traffic; obtaining resource usage information of a resource pool before a first short-term window; determining collided UEs from the resource usage information; determining whether the collided UEs have sufficient resource units; selecting no resource within the first short-term window when the collided UEs lack sufficient resource units and waiting for a second short-term window; and selecting, in a random manner, an idle resource unit from the resource pool at the first short-term window when the collided UEs have sufficient resources.

FIG. 6

## Description

TECHNICAL FIELD

The disclosure is directed to a radio resource sensing and selecting method used by a mobile device for wireless communication and a mobile device using the same.

BACKGROUND

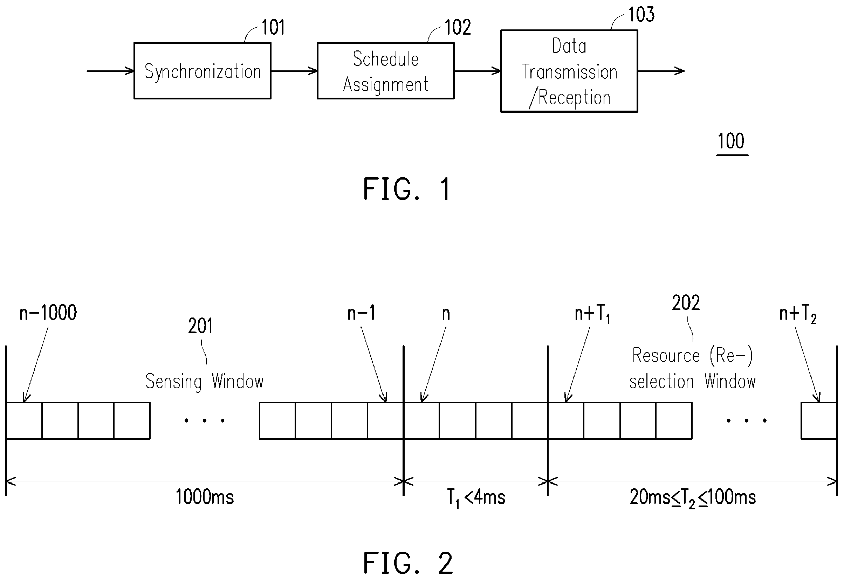

Sidelink communication has been under an ongoing development for the vehicle-to-everything (V2X) technology. Sidelink communication is a newer terminology and its concept is synonymous with device-to-device (D2D) communication or proximity-based services (ProSe) communication. For sidelink communication, a flow chart as shown in FIG. 1 shows a conventional sidelink communication procedure 100. The communication procedure 100 includes not limited to synchronization 101, schedule assignment 102, and data transmission and reception 103. First, a procedure of synchronization 101 is performed to synchronize between a first user equipment (UE) and a second UE which could be both vehicles or different types user devices. Next, a procedure of scheduling assignment 102 is performed in order to allocate a resource for the sidelink communication. After the scheduling assignment 102 is completed, then the procedure of data transmission and reception between the first UE and the second UE may commence.

Each of the procedures 101 102 103 is further described under the circumstance when UEs operation under NR V2X mode 2, where mode 2 indicates that a UE determines (i.e. base station does not schedule) sidelink transmission resource(s) within configured sidelink resources, and under mode 2 a base station does not schedule sidelink transmission resource(s) within configured sidelink resources. During the procedure of synchronization 101, it could be assumed that the two UEs are synchronized in NR V2X mode 2 in which the two UEs have the same reference timing. During the procedure of slide link transmission (e.g. 103), the transmitter (Tx) UE may select resources at sidelink control information (SCI) and Data resource pools, respectively. Next, the Tx UE may then transmit or broadcast the SCI in a physical sidelink control channel (PSCCH) at the selected SCI resources, and then the Tx UE may transmit or broadcast data in the physical sidelink shared channel (PSSCH) at the selected data resources.

The content of the SCI may include not limited to, for example, modulation and coding scheme (MCS) (5 bits), time resource pattern for transmission (T-RPT) (7 bits), timing advance (TA) value (6 bits), an identification (ID) (8 bits), and reserved bits. T-RPT is the location information of selected data resources at the data resource pool. The resource size of selected SCI resources could be 1 physical resource block (PRB) pair for each UE.

During the procedure of sidelink reception (e.g. 103), the NR V2X receiver (Rx) UE may detect all SCI at the SCI resource pool and locate the SCI that have been provided by the corresponding Tx UE. Based on the SCI content such as T-RPT, MCS, and ID provided by the corresponding Tx UE, the Rx UE may detect the data provided by the corresponding Tx UE.

The difference between NR V2X mode 1 and NR V2X mode 2 is briefly described. For NR V2X mode 1, a base station would schedule sidelink resources to be used by UEs for sidelink communications. For NR V2X mode 2, a UE would determine the sidelink transmission resources within the sidelink resources configured by a base station or network or within pre-configured sidelink resources as the base station does not perform the scheduling. It should be noted that the disclosure is mostly concerned with NR V2X mode 2. The NR V2X mode 2 may have at least four sub-modes including (a) the UE autonomously selects sidelink resource for transmission, (b) the UE assists sidelink resource selections for other UEs, (c) the UE is configured with NR configured grant (type-1 like) for sidelink transmission, and (d) the UE schedules sidelink transmissions of other UEs. Also, the disclosure may assume that the sensing procedure has been defined as SCI decoding from other UEs and / or from sidelink measurements. The disclosure would also take aperiodic traffic into account as aperiodic traffic may have characteristics such as variable packet sizes and traffic occurring at any moment and thus introduce another layer of complexity.

In NR V2X mode 2, periodic and aperiodic traffic should be considered to solve resource collision problems with enhanced mechanisms. For NR V2X mode 2(a), UE may determine sidelink transmission resources by itself by randomly select resources and / or select resources based on a pre-configured policy. For NR V2X mode 2(b), UE may determine sidelink transmission resources by itself with assisting information provided by other UEs. For NR V2X mode 2(c), UE may determine sidelink transmission resources assisted by a NR configured grant which is provided by a base station when the UE briefly moves out of the coverage of the base station. For NR V2X mode 2(d), UE may determine sidelink transmission resources scheduled by a coordinator, such as a road side unit (RSU) local manager or a group head UE.

For NR V2X mode 2, there could be further issues related to latency and collision of resource sensing and selection for aperiodic traffic. For the NR V2X Mode 2 scenario with aperiodic traffic, the width of the sensing window could be as long as 1000 milliseconds (ms) which may introduce latency related issues. FIG .2 shows a known sensing window 201 to be followed by a resource selection/re-selection window 202 for a Long-Term Evolution (LTE) mode 4 system running in a scenario similar to the NR V2X mode 2. It should be noted that the long term resource sensing and resource selection is adopted by the LTE system where the eNB does not schedule resources. Within the 1000 ms of sensing window 201 as shown in FIG. 2, the sensing window 201 is adopted to perform resource sensing in order to identify idle resources and busy resources. Subsequently, an idle resource could be randomly selected within the resource selection/re-selection window 202. However, for the NR V2X mode 2 with aperiodic traffic, the 1000 ms of the width of the sensing window 201 may introduce a latency issue.

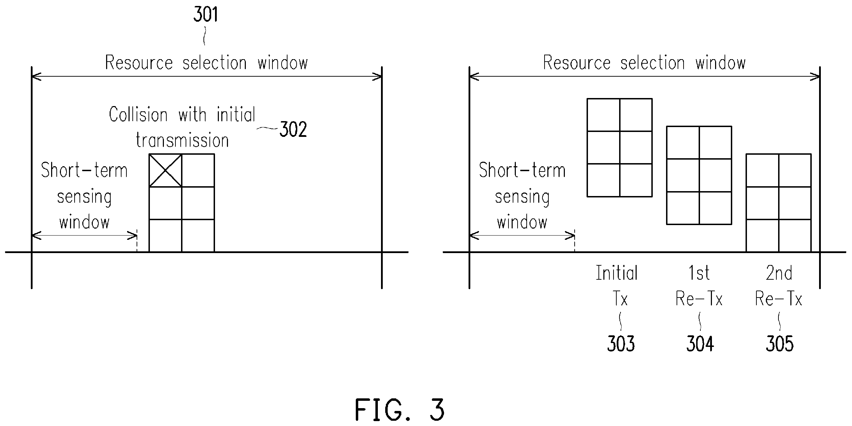

Also, since resource allocation is performed without the assistance from a base station, there could be collision related issues especially for aperiodic traffic transmissions. FIG. 3 shows a collision during a resource selection within a resource selection window 301. During the resource selection window 301, a collision with initial transmission may occur 302 since there could be a high probability for Tx UEs to select the same resource from the resource pool as the within the same period of time. Alternatively, the Tx UE may utilize a resource repetition technique by transmitting the same data multiple times 303 304 305. However, even though such technique may reduce the probability of resource collision, the repetition of the same resource may result in a decrease of resource utilization. Therefore, based on the current state of the NR V2X mode 2 as described thus far, there could be a new or modified mechanism to scope with issues such as latency or resource collisions for the current NR V2X mode 2.

## SUMMARY OF THE DISCLOSURE

Accordingly, the disclosure is directed to a radio resource sensing and selecting method used by a mobile device for wireless communication and a mobile device using the same.

In an exemplary embodiment, the disclosure is directed to a resource sensing and selecting method used by a user equipment (UE) newly entering a network and operating under NR V2X mode 2. The method includes not limited to: receiving aperiodic data traffic; obtaining resource usage information of a resource pool before a first short-term window; determining collided UEs from the resource usage information; determining whether the collided UEs have sufficient resource units; selecting no resource within the first short-term window when the collided UEs lack sufficient resource units and waiting for a second short-term window; and selecting, in a random manner, an idle resource unit from the resource pool at the first short-term window when the collided UEs have sufficient resources.

In another exemplary embodiment, the disclosure is directed to a UE which includes not limited to: a transceiver; and a processor coupled to the transceiver and configured to: receive, by using the transceiver, aperiodic data traffic; obtain resource usage information of a resource pool before a first short-term window; determine collided UEs from the resource usage information; determine whether the collided UEs have sufficient resource units; select no resource within the first short-term window when the collided UEs lack sufficient resource units and waiting for a second short-term window; and select, in a random manner, an idle resource unit from the resource pool at the first short-term window when the collided UEs have sufficient resources.

In another exemplary embodiment, the disclosure is directed to A resource sensing and selecting method used by a user equipment (UE) and operating under new radio NR V2X mode 2 and has experienced a resource collision. The method would include not limited to: receiving aperiodic traffic and experiencing the resource collision of a first resource unit during a first short-term window; releasing the first resource unit and obtaining resource usage information of a resource pool before a second short-term window; determining whether to re-select the first resource unit or a second resource unit which is an idle resource from the resource pool during the second short-term window by determining whether a first priority UE criterion or a second priority UE criterion is met; ceasing to re-select the first resource unit or the second resource unit from the resource pool during the second short-term window in response to having determined that neither the first priority UE criterion nor the second priority UE criterion has been met and waiting for a third short-term window; and re-selecting the first resource unit or the second resource unit randomly and/ or by a pre-configured policy from the resource pool during the second short-term window in response to having determined that either the first priority UE criterion or the second priority UE criterion has been met.

In order to make the aforementioned features and advantages of the present disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the exemplary embodiments of the present disclosure and is therefore not meant to be limiting or restrictive in any manner. Also, the present disclosure would include improvements and modifications which are obvious to one skilled in the art.

## BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

FIG. 1 illustrates a conventional sidelink communication procedure.

FIG. 2 illustrates a sensing window and a resource selection window for LTE V2X mode 4.

FIG. 3 shows a collision during a resource selection within a resource selection window.

FIG. 4A is a flow chart which shows a resource sensing and selecting method used by a user equipment (UE) newly entering a network and operating under new radio vehicle-to-everything (NR V2X) mode 2.

FIG. 4B is a flow chart which shows a resource sensing and selecting method used by a user equipment (UE) and operating under new radio vehicle-to-everything (NR V2X) mode 2 and has experienced a resource collision.

FIG. 5 is a hardware block diagram of a mobile device according to an exemplary embodiment of the disclosure.

FIG. 6 illustrates an implementation of a long-term sensing window in combination with a short-term sensing window according to an exemplary embodiment of the disclosure.

FIG. 7 illustrates the combination of long-term sensing window and short-term sensing window triggered by aperiodic traffic according to an exemplary embodiment of the disclosure.

FIG. 8A illustrates a collision of an SCI resource in the combined long-term sensing window and short-term sensing window according to an exemplary embodiment of the disclosure.

FIG. 8B illustrates a collision of a data resource in the combined long-term sensing window and short-term sensing window according to an exemplary embodiment of the disclosure.

FIG. 9 illustrates an overlapping of an observation window and the short-term resource sensing and (re-)selection window as the overlapping does not occur with a long-term sensing window parts according to an exemplary embodiment of the disclosure.

FIG. 10 illustrates an overlapping of an observation window and the short-term resource sensing and (re-) selection window as the overlapping does occur with a long-term sensing window parts according to an exemplary embodiment of the disclosure.

FIG. 11 illustrates an enhanced short-term resource sensing and policy selection procedure according to a first exemplary embodiment of the disclosure.

FIG. 12 illustrates an enhanced short-term resource sensing and policy selection procedure according to a second exemplary embodiment of the disclosure.

FIG. 13 is an example showing the position numbers for the SCI resource subset and data resource subset according to a third exemplary embodiment of the disclosure.

FIG. 14 is an example showing the resource usage for data resource subset according to a third exemplary embodiment of the disclosure.

FIG. 15 is an example showing resource collisions for data resource subset according to a third exemplary embodiment of the disclosure.

FIG. 16 is an example showing collision mitigation at the 2nd window according to a third exemplary embodiment of the disclosure.

FIG. 17 is a graph showing resource utilization for random selection with a number of users.

FIG. 18 is an example showing resource usage for SCI resource subset according to a fourth exemplary embodiment of the disclosure.

FIG. 19 is an example showing a resource collision for SCI resource subset according to a fourth exemplary embodiment of the disclosure.

FIG. 20 shows an example of collision mitigation at the second window according to a fourth exemplary embodiment of the disclosure.

FIG. 21 shows a continuation of the example of FIG. 20 according to a fourth exemplary embodiment of the disclosure.

## DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

The disclosure is directed to a radio resource sensing and selecting mechanism for a mobile UE operating under NR V2X mode 2. More specifically, the disclosure provides a short-term resource sensing and policy selection mechanism working along-side a long-term resource sensing window and a resource selecting window for implementing NR V2X mode 2 resource allocations with aperiodic traffic to reduce occurrences of resource selection collisions. By operating under NR V2X mode 2 for slidelink wireless communications, mobile UEs typically do not receive any assistance information from base stations (e.g. gNB) or from the network. At first, resource usage information, such as the number of idle resource units and their corresponding locations, number of occupied resource units which are resource units having no resource collision and their corresponding locations, number of collided UE, number of collided resource units for each collided UE and their corresponding locations, and other parameters, can be obtained by conducting an energy or a power level measurements and / or from performing SCI decoding for enhanced short-term sensing. Thus, the priority criterion of UEs for resource selection could be based on the measurement of resource usage information and / or the use of new SCI information, such as a priority indicator, an indicator of the number of collisions, and the like, so as to reduce the collision issues.

Resource collisions would occur when multiple UEs attempting to select the same unused resources from a resource pool within a time window due to not having a base station to coordinate the allocation of resources. In order to efficiently utilize resources and to minimize the impact of resource collisions when receiving any aperiodic traffic while operating under NR V2X mode 2, the disclosure provides an apparatus and a method which include using SCI decoding and / or energy measurement to obtain information related to radio resource allocations and priority information for selecting the radio resources by the UE. The disclosure also includes using an enhanced short-term resource sensing and a resource selection (or re-selection) procedure so as to reduce the number of collisions of (re-)selections (i.e. selections/re-selections of radio resources under the circumstance in which UEs, such as a vehicle, are operating under NR V2X mode 2 and are unable to receive assistance information from a base station or a network while coping with aperiodic data traffic.

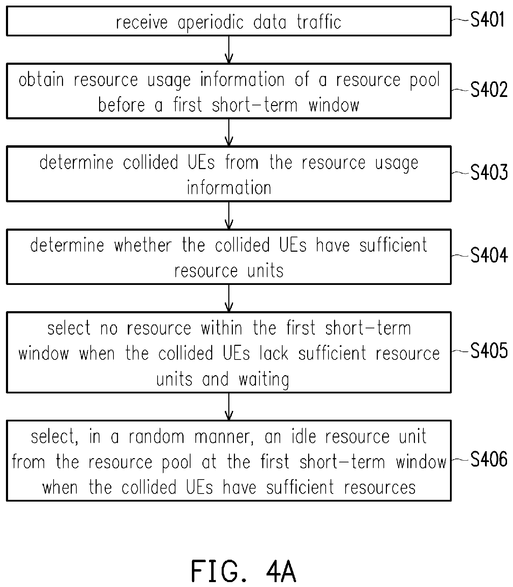

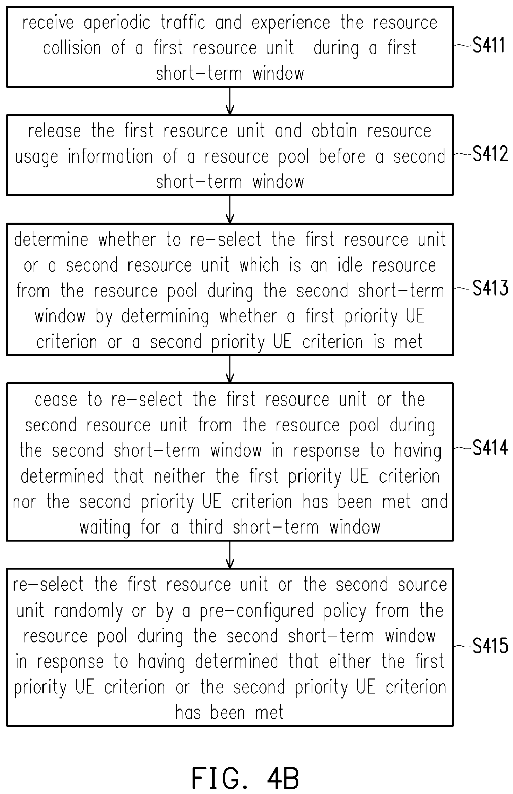

FIG. 4 ~ FIG. 10 and their corresponding written descriptions serve to explain various concepts of the disclosure. FIG. 4A is a flow chart which shows a resource sensing and selecting method used by a UE newly entering a network and operating under NR V2X mode 2 according to an exemplary embodiment of the disclosure. In step S401, the UE would receive aperiodic data traffic. In step S402, the UE would obtain resource usage information of a resource pool before a first short-term window. In step S403, the UE would determine collided UEs from the resource usage information. In step S404, the UE would determine whether the collided UEs have sufficient resource units. In step S405, the UE would select no resource within the first short-term window when the collided UEs lack sufficient resource units and waiting for a second short-term window. In step S406, the UE would select, in a random manner, an idle resource unit from the resource pool at the first short-term window when the collided UEs have sufficient resources. It would be apparent to an ordinary person skilled in the art that steps S405 and S406 are interchangeable.

FIG. 4B shows a resource sensing and selecting method used by a UE and operating under NR V2X mode 2 and has experienced a resource collision. In step S411, the UE would receive aperiodic traffic and experience the resource collision of a first resource unit during a first short-term window. In step S412, the UE would release the first resource unit and obtain resource usage information of a resource pool before a second short-term window. In step S413, the UE would determine whether to re-select the first resource unit or a second resource unit which is an idle resource from the resource pool during the second short-term window by determining whether a first priority UE criterion or a second priority UE criterion is met. In step S414, the UE would cease to re-select the first resource unit or the second resource unit from the resource pool during the second short-term window in response to having determined that neither the first priority UE criterion nor the second priority UE criterion has been met and waiting for a third short-term window. In step S415, the UE would re-select the first resource unit or the second resource unit randomly or by a pre-configured policy from the resource pool during the second short-term window in response to having determined that either the first priority UE criterion or the second priority UE criterion has been met.

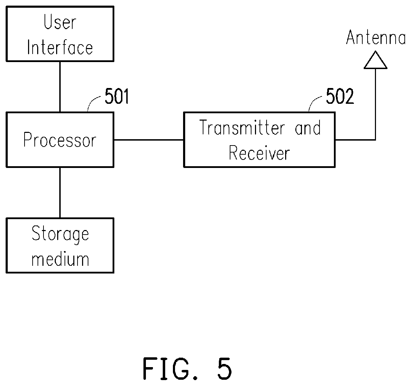

FIG. 5 is a hardware block diagram of a UE or a mobile device according to an exemplary embodiment of the disclosure. The UE of FIG. 5 may include not limited to a processor 501 electrically coupled to a transmitter and a receiver (transceiver) 502, and optionally a user interface, a non-transitory storage medium. The processor 501 is configured to at least for implementing the method used as described in FIG. 4A and / or FIG. 4B as well as its exemplary embodiments and alternative variations. The transmitter circuit 502 may include one or more transmitting circuits, and the receiver circuit 502 may include one or more receiving circuits configured to transmit and receive signals respectively in the radio frequency or in the mmWave frequency. The transmitter circuit and receiver circuit 502 may also perform operations such as low noise amplifying, impedance matching, frequency mixing, up or down frequency conversion, filtering, amplifying, and so forth. The transmitter circuit and the receiver circuit 502 may each include one or more digital-to-analog (D/A) converters or analog-to-digital (A/D) converters which are configured to convert from a digital signal format to an analog format during uplink signal processing or from an analog format to a digital format during downlink signal processing. The transmitter circuit and receiver circuit 502 may each include an antenna array which may include one or multiple antennas to transmit and receive omni-directional antenna beams or directional antenna beams.

The user interface (UI) provides a way such as a keyboard or a touch screen or a display monitor for a user to interact with the UE and to receive information from the UE. The non-transitory storage medium would store programming codes, codebook configurations, buffered data, and/or record configurations assigned by the processor 501. The processor 501 could be implemented by using programmable units such as a micro-processor, a micro-controller, a DSP chips, FPGA, etc. The functions of the processor 501 may also be implemented with separate electronic devices or ICs. It should be noted that the functions of the processor 501 may be implemented with either hardware or software.

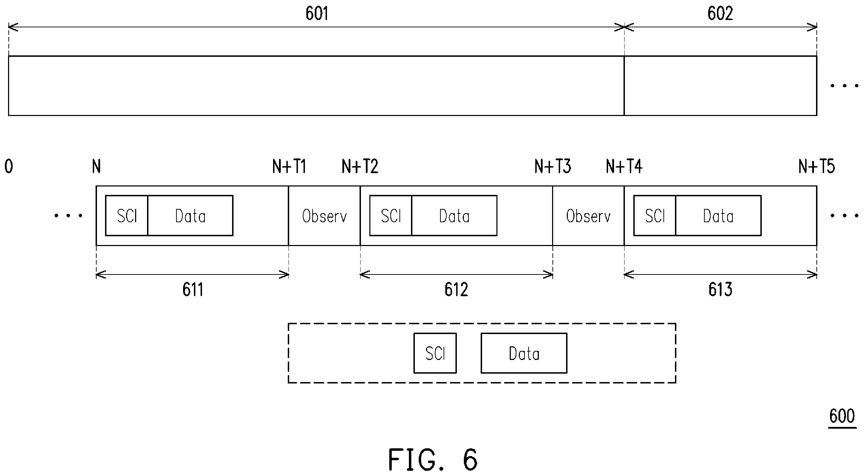

In the conventional LTE V2X technology, a UE would typically perform resource sensing in a long-term sensing window which has a width of 1000 ms and perform random resource selection in a resource selection window. To order to reduce such long latency, the disclosure provides a hybrid long-term and short-term resource sensing and (re-)selection mechanism. FIG. 6 shows the hybrid long-term and short-term resource sensing and selection window 600 which include a long-term sensing window 601 and a resource selection window 602. The long-term sensing window 601 is indicated in the time axis as spanning from 0 to N + T4. The resource selection window 602 is indicated in the time axis as spanning from N + T4 until N + T5. Within the long-term sensing window, there could be a plurality of short-term resource sensing and (re-)selection windows 611, 612, and 613. The short-term resource sensing and (re-)selection windows 611, 612, and 613 would span from N to N + T1, N + T2 to N + T3, and N + T4 to N + T5, and etc. Between the short-term resource sensing and (re-)selection window 611, 612, and 613, there could be observation windows for different observation windows (indicated as "Observ" in FIG. 6) spanning from N + T1 until N + T2, spanning from N + T3 until N + T4, and so forth.

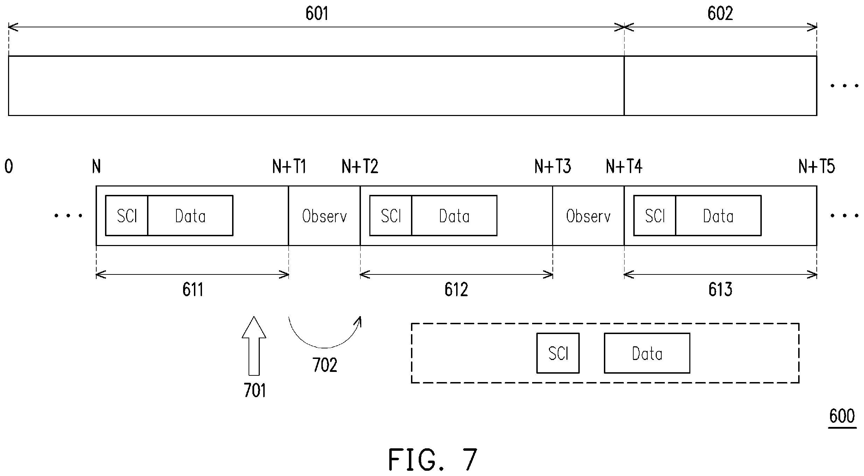

An example of the handling of aperiodic traffic is shown in FIG. 7. In general, when an aperiodic traffic within a short-term resource sensing and (re-)selection window is detected, a resource selection may occur at the next short-term resource sensing and (re-)selection window. For example, in response to receiving the aperiodic traffic 701 within the short-term resource sensing and (re-)selection window 611, a resource selection 702 occurs at the next short-term resource sensing and (re-)selection window 612.

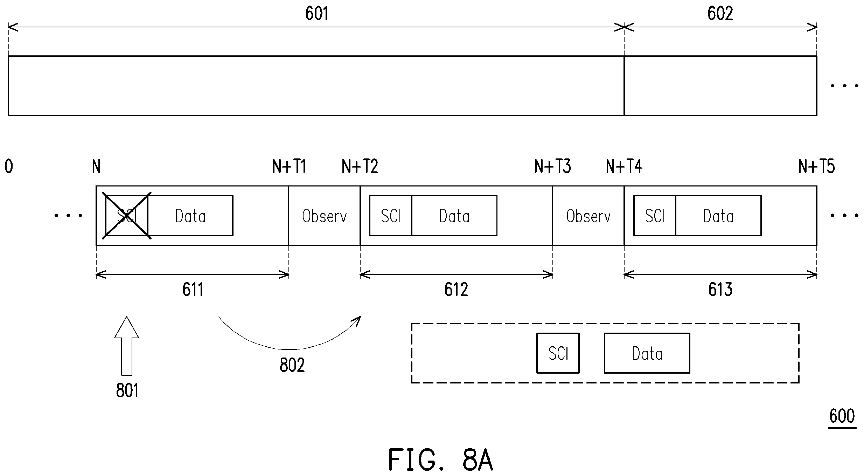

When receiving the aperiodic traffic, resource collisions may occur when two UEs are attempting to select the same radio resources within the same short-term resource sensing and (re-)selection window. In general, when a collision of selections of a SCI resource within a short-term resource sensing and (re-)selection window is detected, a UE may obtain a resource usage information that can be used in the following short-term resource sensing and (re-)selection window. In the example as shown in FIG. 8A, when a collision 801 has been detected to have occurred by a UE in the short-term resource sensing and (re-)selection window 611, the UE may obtain a resource usage information 802 that can be used in the next short-term resource sensing and (re-)selection window 612.

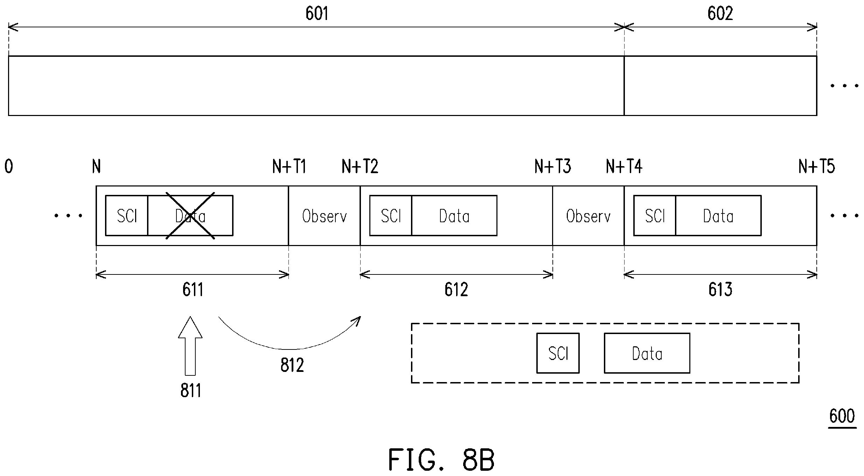

Similarly, resource collisions may also occur when two UEs are attempting to select the data resources within the same short-term resource sensing and (re-) selection window. In general, when a collision of selections of a data resource within a short-term resource sensing and (re-)selection window is detected, a UE may obtain a resource usage information that can be used in the following short-term resource sensing and (re-)selection window. In the example as shown in FIG. 8B, when a collision of a data resource 811 has been detected to have occurred by a UE in the short-term resource sensing and (re-)selection window 611, the UE may obtain a resource usage information 812 that can be used in the next short-term resource sensing and (re-)selection window 612.

By conducting an energy or a power level measurement during an observation window (indicated as "Observ" in FIGs. 6, 7, 8A and 8B) that comes before the short-term resource sensing and (re-)selection window 611, 612, or 613, the resource usage information could be obtained. In general, the purpose of the observation window includes performing energy or power measurements to obtain resource usage information. A resource usage information may include a number of idle resources and their corresponding locations, a number of occupied resource units which are resource units having no resource collision and their corresponding locations, a number of collided UEs which has selected collided resources, a number of collided resource units for each collided UE and their corresponding locations.

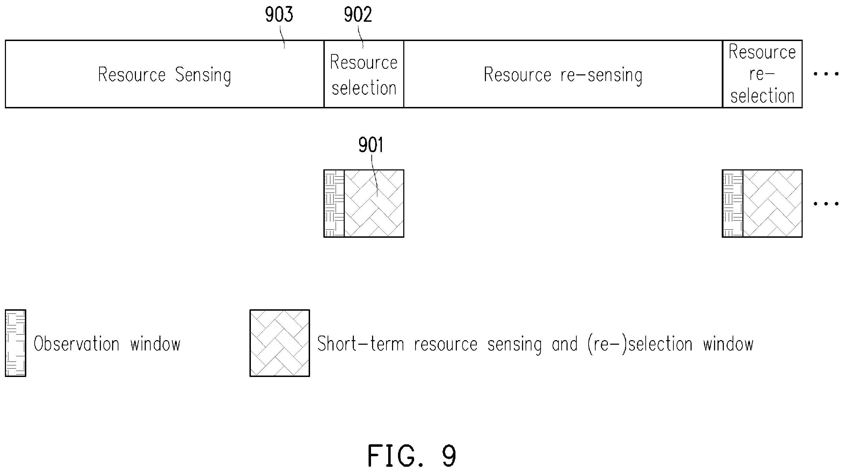

There could be at least two types of hybrid long-term and short-term resource sensing and (re-)selection mechanism. For type 1, an observation window and a short-term resource sensing and (re-)selection window are only overlapped (i.e. occurring at the same time window) with a resource selection window but are not overlapped with a long-term sensing window. This means that when aperiodic traffic occurs, a long latency could be inevitable in order to perform sensing of radio resources. Referring shows an example of a type 1 hybrid long-term and short-term resource sensing and (re-)selection mechanism. As shown in FIG. 9, the short-term resource sensing and (re-)selection window 901 are only overlapped with a resource selection window 902 but are not overlapped with a long-term sensing window 903. Although the type 1 mechanism is easily compatible to LTE V2X, only a small additional computation complexity could be needed, and the SCI decoding is used for short-term resource sensing. However, the latency could be larger than other types for aperiodic traffic.

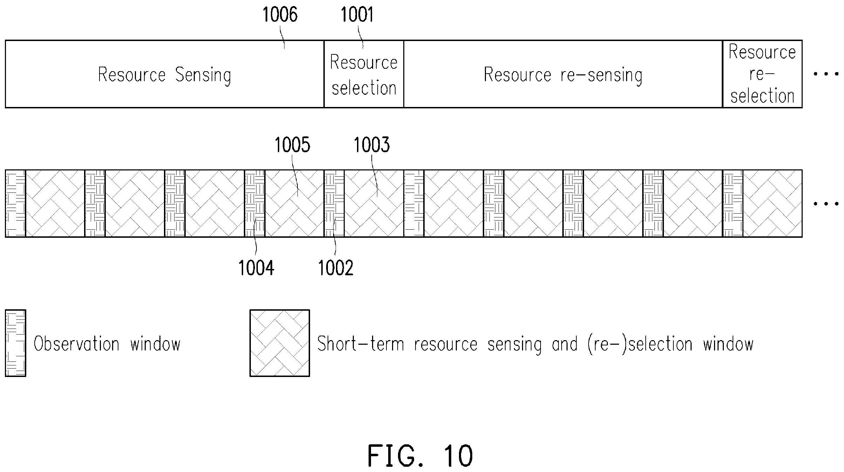

Alternative, for type 2, the resource selection window may overlap with an observation window and a short-term resource sensing and (re-)selection window, and both the observation window and a short-term resource sensing and (re-) selection window may overlap with the long-term sensing window. For the type 2 mechanism, when aperiodic traffic occurs in a short-term resource sensing and (re-)selection window, a long latency would not be needed. Although the type 2 mechanism does not incur as much latency, it is not easily compatible to LTE V2X and more additional computation complexity could be needed. As shown in FIG. 10, the resource selection window 1001 may overlap with an observation window 1002 and a short-term resource sensing and (re-)selection window 1003, and both an observation window 1004 and a short-term resource sensing and (re-)selection window 1005 may overlap with the long-term sensing window 1006.

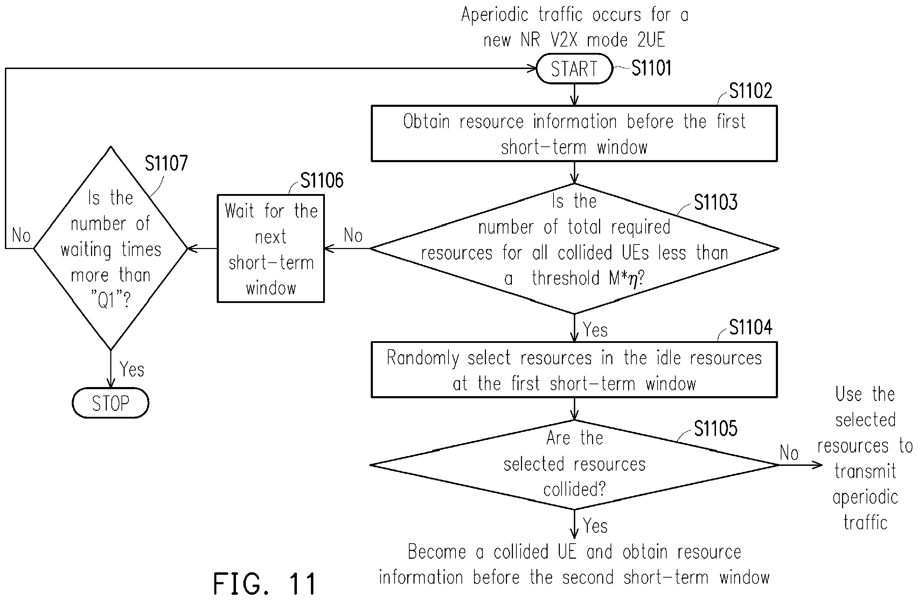

In order to further explain the above described concepts of the disclosure, the disclosure provides multiple exemplary embodiments as shown and described in FIG. 11 ~ 19 and their corresponding written descriptions. FIG. 11 shows an enhanced short-term resource sensing and policy selection procedure according to a first exemplary embodiment of the disclosure. The procedure of FIG. 11 is applicable to a UE that has newly arrived to a network. In step S1101, traffic is assumed to have occurred for an UE operating under NR V2X mode 2. In step S1102, a UE operating under NR V2X mode 2 may obtain resource usage information before a first short-term window. The resource usage information could be obtained by conducting an energy or power measurement for the case of SCI resource collision. Besides, the resource usage information could also be obtained by conducting an energy or power measurement and / or SCI decoding for the case of data resource collision while the SCI resources are not collided. The resource usage information may include not limited to (1) the number of the idle resource units and their corresponding locations, (2) the number of occupied resource units which are resource units having no resource collision and their corresponding locations, (3) the number of collided UEs which has selected a collided resource unit, and (4) the number of collided resource units for each collided UE and their corresponding locations.

In step S 1103, a UE operating under NR V2X mode 2 may determine whether or not the resources are sufficient for the collided UEs. In detail, the UE may determine whether number of total required resources for all collided UEs is less than a threshold M * η, where M is the sum of idle resource units and collided resource units, η is 1 when the priority order of all collided UEs can be distinguished, η is a pre-configured value between 0 and 1 (e.g. η = 0.5) when the priority order of all collided UEs cannot be distinguished. If the total required resources for all collided UEs is less than the threshold M * η, then in step S1104, the UE would randomly select resources in an idle resource pool within the first short-term window.

Next, in step S1105, the UE would determine whether there are selected resources that have been collided. If so, then the UE would become a collided UE and would obtain resource usage information before a second short-term window; otherwise, the UE would use the selected resources to transmit or broadcast aperiodic traffic and may release the selected resource after the transmission of the aperiodic traffic has been completed. Back in step S1103, if the total required resources for all collided UEs is equal to or greater than the threshold M * η, then in step S1106, the UE would wait for the next short-term window. In step S1107, the UE would determine if the number of times of waiting is greater than Q1. If the number of times of waiting is greater than Q1, then the procedure would stop as the UE would stop transmitting or broadcasting the aperiodic traffic which has failed; otherwise, the procedure starts from step S1101 and keep obtaining the resource usage information before the second short-term window. Q1 could be a pre-configured integer which is greater than zero.

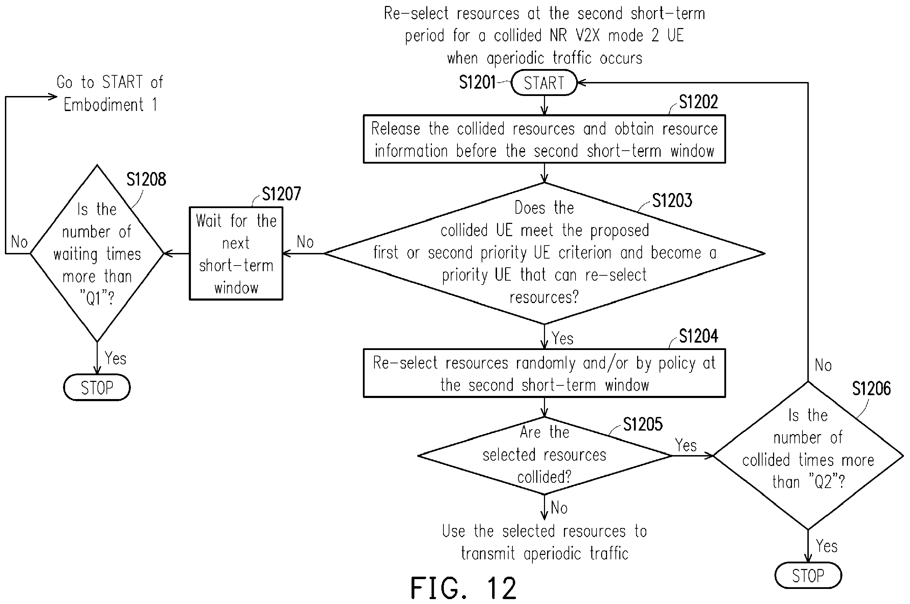

FIG. 12 shows an enhanced short-term resource sensing and policy selection procedure according to a second exemplary embodiment of the disclosure. Before describing the procedure of FIG. 12 in detail, the concept of using different priority UE criteria is introduced. The first priority UE criterion is met by a collided UE when the priority order of all collided UEs can be distinguished, the total number of required resources for a first n* UEs with higher priority order is less than a threshold M, and the collided UE belongs to the first n* UEs, where M is the sum of idle resource units and collided resource units, and n* is the maximum number of the collided UEs that met the first priority UE criterion. The second priority UE criterion is met by a collided UE when the priority order of all collided UEs cannot be distinguished, the total required resources for a first n* UEs having smaller required resources and/or smaller position number is less than a threshold M * η, and the collided UE belongs to the first n* UEs, where M is the sum of idle resource units and collided resource units, 0< η <1 (e.g., η=0.5), and n* is the maximum number of the collided UEs that met the second priority UE criterion.

The procedure of FIG. 12 is applicable to a UE that has experienced a resource collision. Referring to FIG. 12, in step S1201, the UE would re-select resources at a second short-term window for a collided UE operating under the NR V2X mode 2 when the UE has received aperiodic traffic. In step S 1202, the UE would release the collided resource and obtain resource information before the second short-term window. In detail, the UE which operates under the NR V2X mode 2 would be classified as a collided UE, and the UE would release the selected collided resource(s) and would conduct a measurement to obtain the resource usage information before the second short-term window. The resource usage information can be obtained by conducting a power measurement or an energy measurement for the case of an SCI collision case before the second short-term window. Further, the resource usage information can be obtained by conducting a power measurement or an energy measurement and / or by performing an SCI decoding for the case of a data resource collision when the SCI resources are not collided before the second short-term window. The resource usage information would include not limited to the number of the idle resource units and their corresponding locations, the number of occupied resource units which are resource units having no resource collision and their corresponding locations, the number of collided UEs which has selected collided resource units, and number of collided resource units for each collided UE and their corresponding locations.

In step S 1203, the UE operating under the NR V2X mode 2 would decide whether the UE may re-select the resource(s) in the collided resources that has been released and / or the idle resources. In step S 1204, the UE may re-select such resource(s) randomly or according to a pre-configured policy at the second short-term window if the UE has met the above described the first priority UE criterion or the second priority UE criterion which will be described further with more details. If the UE however does not meet the proposed first priority UE criterion and the proposed second priority UE criterion, then in step S1207, the UE does not re-select the resource(s) in the collided resources which was released and / or the idle resources at the second short-term window. Instead, the UE would wait for a third short-term window. In step S1208, the UE would determine whether the number of times of waiting is greater than Q1. If so, the UE would stop transmitting or broadcasting the aperiodic traffic, and the aperiodic traffic transmission is treated as having failed, and Q1 is a pre-configured integer greater than 0. If the number of times of waiting is less than or equal to Q1, then the UE would proceed from step S1101 of the procedure in FIG. 11, and the UE may keep on obtaining the resource usage information and determining whether the collided UEs have sufficient resource units at the next short-term .

Back in step S1204, since the UE has met the proposed first priority UE criterion or the proposed second priority UE criterion, the collided UE becomes a priority UE and may re-select the resource(s) randomly or by a pre-configured policy in the collided resources which has been released and / or the idle resources at the second short-term window. The priority UE may re-select the resource(s) by the pre-configured policy according to the proposed first priority UE criterion when the priority order of all collided UEs can be distinguished, and the priority UE may re-select the resource(s) randomly and by the pre-configure policy according to the proposed second priority UE criterion when the priority order of all collided UEs cannot be distinguished.

In step S 1205, the UE would determine whether the selected resource(s) are not collided. If not, then the UE may use the selected resource(s) to transmit or broadcast the aperiodic traffic, and the UE would release the selected resource(s) after the aperiodic traffic transmission has been completed. However, if the selected resource(s) have been collided for the UE, then in step S 1206, the UE may determine whether the number of times of collisions (or quantity of collisions) that has occurred times is more than (or exceeds) Q2 in response to having determined that the first resource unit or the second resource unit which has been selected has collided. If yes, the UE may cease to transmit or broadcasting the aperiodic traffic in response to having determined that the quantity of collisions has exceeded Q2, and the transmission of the aperiodic traffic is to be treated as having failed. The Q2 is pre-configured integer or number greater than 0. On the contrary, if the number of times of collisions is less than or equal to Q2, then the procedure would proceed in step S1201 by continuing to release the selected collided resource(s), obtaining the resource usage information, and determining whether to select resource(s) from the resource pool or not.

Essentially, the selecting an idle resource unit from the resource pool at a short-term period when the collided UE have sufficient resources may include determining whether the idle resource unit which has been selected has collided, using the idle resource unit which has been selected to perform a transmission when the idle resource unit has not collided, and releasing the idle resource unit after the transmission is finished. The proposed first priority UE criterion is to be explained in further details. For the proposed first priority UE criterion, the priority order of all collided UEs can be distinguished. For the collided resources and idle resources, the parameters are defined as follows. The parameter M is the sum of M1 and M2, where M1 is the number of the released collided resource units, and M2 is the number of the idle resource units. $L_i$ is the number of collided resource units for collided UE $i$. N is the number of collided UEs.

The priority order of all collided UEs can be distinguished based on the following information. (1) A priority indicator would indicate the level of emergency of the aperiodic traffic having low latency requirement, a collided UE with high level priority indicator would have a high priority order, and the priority indicator could be indicated in the content of a SCI. (2) An indicator of collided times for resource collision, the indicator having a large value for a collided UE may have a high priority order, and the indicator could be indicated in the content of a SCI. (3) $L_i$ which indicates the number of collided resource units for collided UE $i$, as a collided UE with small $L_i$ may have a high priority order. (4) Position number of the selected collided resource(s). If the position number of the selected collided resource(s) has a small value, then the collided UE may have a high priority order.

The disclosure provides a procedure for detecting the priority order of all collided UEs. First, the priority indicator of all collided UEs is compared. The collided UE having a high level priority indicator would be considered as having a high priority order. Next the indicators of the number of times of resource collisions are compared when the collided UEs have the same priority indicator. If an indicator of the number of times of resource collisions of a first UE shows a larger value than a second UE, then the first UE may have a higher priority order. Moreover, the number of collided resource units for collided UE (indicated as $L_i$) are compared when the collided UEs have the same priority indicator as well as the indicator of the number of times of resource collisions showing the same values. Then, a first collided UE having a small $L_i$ value than a second collided UE may have a higher priority order. Lastly, the position numbers of the selected collided resource(s) are compared when the collided UEs have the same priority indicator, the same number of times of resource collisions, and the same $Li$. A first collided UE that has a smaller value of a position number than a second UE may have a higher priority order.

The disclosure also provides a procedure of resource re-selection by a pre-configured policy according to the proposed first priority UE criterion to be described as follows. The collided UE i with a first priority order may re-select resource(s) from the released collided resources and the idle resources as long as $L_i \leq M$. The collided UE i may re-select resource(s) with first smallest position number from the released collided resources and idle resources. The collided UE $j$ with a second priority order may re-select resource(s) in the released collided resources and the idle resources as long as $L_i + L_j \leq M$. The collided UE $j$ may re-select resource(s) with a second smallest position number in the released collided resources and idle resources, and so on. The collided UE may not re-select resource(s) when the M resource units are not enough for the collided UE. The new UEs may not select resources at next short-term window when the released collided resources and the idle resources are not enough for collided UEs, i.e. $\sum_{i=1}^{N} L_i > M$.

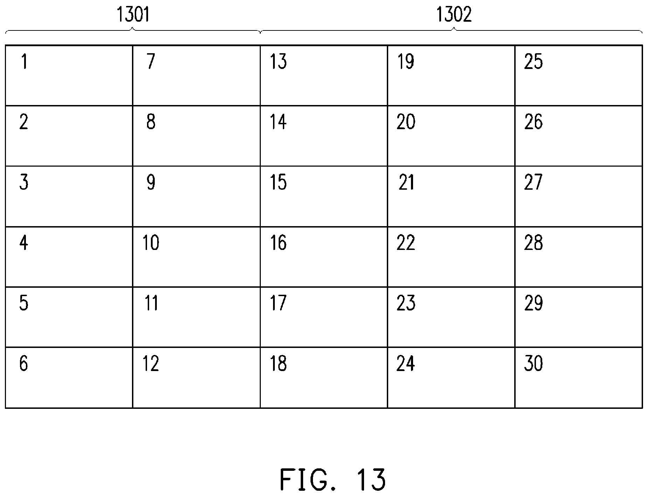

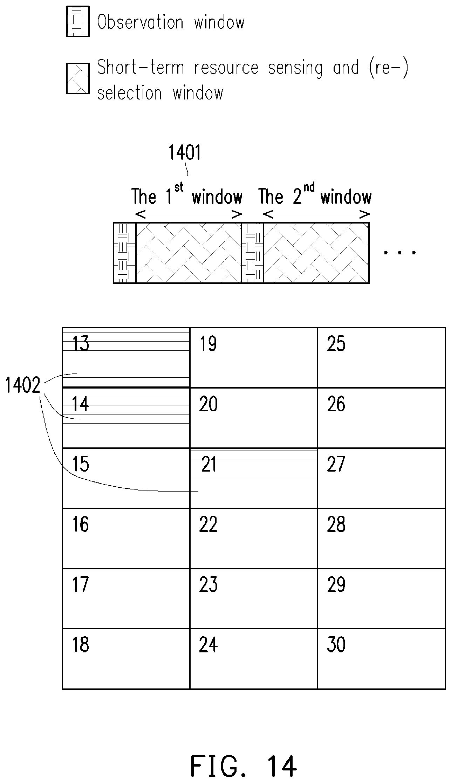

A radio resource could be selected by using an enhanced short-term resource (re-)sensing and policy (re-)selection mechanism. FIG. 13 is an example showing the position numbers for the SCI resource subset 1301 and data resource subset 1302 according to a third exemplary embodiment of the disclosure. It is assumed that the position number of the SCI resource subset 1301 is {1 - 12} and the position number of the data resource subset is {13 - 30}. FIG. 14 is an example showing the resource usage for data resource subset 1302 according to a third exemplary embodiment of the disclosure. Each UE may randomly selects required resource units from idle resource subset at the 1st window 1401, where the 1st window indicates the 1st short-term window, which includes a short term resource sensing and (re-)selection window. In the case, we assume that resource collision does not occur at SCI resource subset, and the proposed first priority UE criterion is adopted. For the example of FIG. 14, the idle data resource subset is {15, 16, 17, 18, 19, 20, 22, 23, 24, 25, 26, 27, 28, 29, 30} and the occupied resource subset 1402 is {13, 14, 21} for data resources.

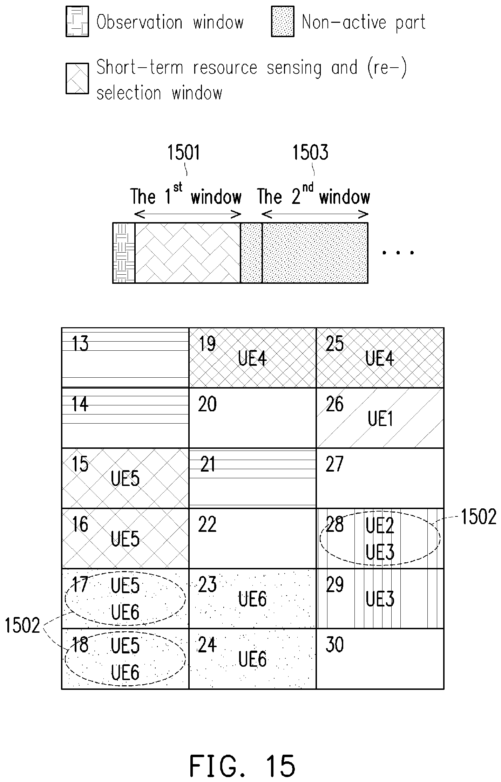

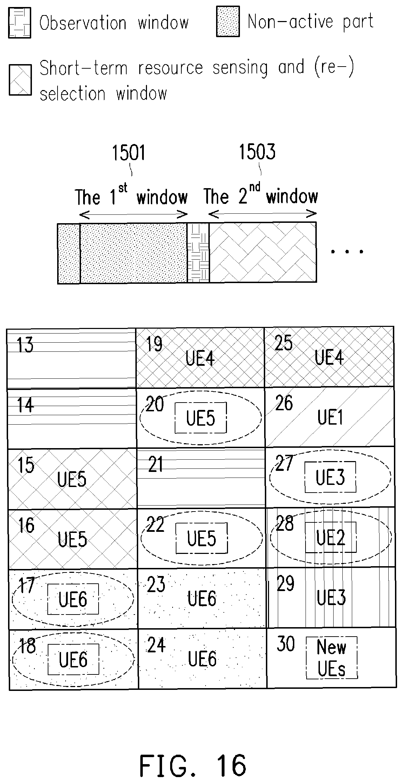

FIG. 15 is an example showing resource collisions for data resource subset according to a third exemplary embodiment of the disclosure. Each UE may randomly selects required resource units from idle resource subset at the 1st window 1501. In this embodiment, 6 UEs including UE1, UE2, UE3, UE4, UE5, UE6 would select resources from the idle data resource subset, where UE1 and UE2 are assumed to select 1 resource unit, UE3 and UE4 are assumed to select 2 resource units, and UE5 and UE6 are assumed to select 4 resource units.. It is assumed that a collision does not occur for UE 1 and UE 4, but collisions have occurred for UE2, UE3, UE5 and UE6. These UEs including UE2, UE3, UE5 and UE 6 are collided UEs 1502 and will reselect resources based on our proposed first priority UE criterion at the 2nd window 1503 to be shown in FIG. 16 and to be described accordingly. The number of the idle resource units and their corresponding locations, the number of occupied resource units which are resource units having no resource collision and their corresponding locations, the number of collided UEs, and the number of collided resource units for each collided UE and their corresponding locations could be obtained by conducting SCI decoding and energy or power measurement before the 2nd window 1503. In this example, the collided resource subset is {17, 18, 28} with 3 collided resource units, and the number of collided UEs is 4. The 4 collided UEs includes UE2, UE3, UE5 and UE6, where UE2 and UE3 has 1 collided resource unit at collided resource {28}, UE5 and UE6 has 2 collided resource units at collided resources {17, 18}. There are also 2 collided resource units for UE5 and UE6, and 1 collided resource unit for UE2 and UE3. The idle resource subset is {20, 22, 27, 30} which include 4 idle resource units.

FIG. 16 is an example showing collision mitigation at the 2nd window according to a third exemplary embodiment of the disclosure. In this example, it is assumed that there are 4 collided UEs, 3 collided resource units, and 4 idle resource unit. It is also assumed that there are 2 collided resource units for UE5 and UE6, and there is 1 collided resource unit for UE2 and UE3. The priority order of the 4 collided UEs are assumed to be UE6 > UE5 > UE3 > UE2. For the policy re-selection based on the proposed first priority UE criterion, the collided UE6 will re-select firstly from the resource subset {17, 18}, the collided UE5 will re-select secondly from the resource subset {20, 22}, the collided UE3 will re-select thirdly from the resource subset {27}, the collided UE2 will re-select finally from the resource subset {28}. Further, the resource subset {30} can be selected by new UEs.

Essentially, a UE performs re-selecting the first resource unit or the second resource unit randomly and/or by a pre-configured policy from the resource pool during the second short-term period in response to having determined that either the first priority UE criterion or the second priority UE criterion has been met may include re-selecting the first resource unit or the second resource unit by the pre-configured policy from the resource pool during the second short-term period in response to having determined that the first priority UE criterion has been met, wherein re-selecting resource(s) by the pre-configured policy is according to first priority UE criterion; and re-selecting the first resource unit or the second resource unit randomly and by the pre-configured policy from the resource pool during the second short-term period in response to having determined that the second priority UE criterion has been met, wherein re-selecting resource(s) randomly and by the pre-configured policy is according to second priority UE criterion.

Resource utilizations for N users to randomly select from M resource units is explained as follows. If N users are to select randomly from M resource units, the utilization could be defined as J (M, N) where

$$J(M, N) = \frac{N}{M} * P_1(N, M) + \sum_{\beta=2}^{N-1} \frac{N-\beta}{M} * P_2(N-\beta, \beta, M)$$

$P_1(N,M)$ is the probability for N users select resource in M resource units that N users are not collided to each other. $P_2(N-\beta, \beta, M)$ is the probability for N users select resource from M resource units that N - β users are not collided to each other and β users are collided to each other, where $2 \leq \beta \leq N - 1$.

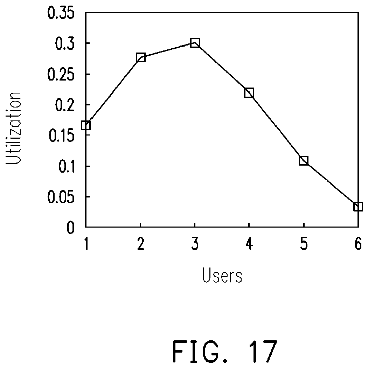

There would be an optimal number of users N' that maximize J(M,N) where N'=η * M, N' is related to M , $0 \leq \eta \leq 1$. For example, M=6, as shown in FIG. 17. For the cast that M=6, N' equals η * M, where η =0.5 is suitable and M can be adaptively estimated.

The proposed second priority UE criterion is to be explained in further details. For proposed second priority UE criterion, the priority order of all collided UEs cannot be distinguished. For the part of collided resources, the parameters are defined as follows. M is the number of released selected collided resource units. $\eta$ is the pre-configured threshold, where $\eta$ =0.5 for example. $L_i$ is the number of collided resource units for collided UE $i$. N is the number of collided UEs.

For the collided resource part, the options of the second priority UE criterion is proposed as follows. In option 1, the following collided UEs are the priority UEs that can re-select resources from the collided resource units at the next short-term window, where the collided UEs are the first n* UEs with smaller values of $L_i$ and smaller position numbers of collided resource units (where $L_i$ is compared first), where $\sum_{i=1}^{n^*} L_i \leq M \cdot \eta,$ and n* is the maximum number that meets the inequality. In option 2, the following collided UEs are the priority UEs that can re-select resources in the collided resource units at the next short-term window, where the select probability of the collided UE $i$ is smaller than the pre-configured probability $P_i$, where $P_i = \dfrac{M \cdot \eta}{N \cdot L_i}$ and $\sum_{i=1}^{N} P_i \cdot L_i = M \cdot \eta.$

For the part of idle resources, the parameters are defined as follows. M is the number of the idle resource units. $\eta$ is the pre-configured threshold, where $\eta$=0.5 for example. $L_i$ is the number of collided resource units for collided UE $i$. N = N1+N2, where N1 is the number of remaining collided UEs (i.e., the priority collided UEs that can re-select resources in the part of collided resources are excluded) and N2 is the number of new UEs. For the part of idle resources, the new UEs cannot select resources at next short-term window when the idle resources are not enough for the remaining collided UEs, i.e., $\sum_{i=1}^{N1} L_i > M \cdot \eta.$ The options of the second priority UE criterion is proposed as follows. For option 1, the following UEs are the priority UEs that can re-select resources in the idle resource units at the next short-term window, where the UEs are the first n* remaining collided UEs with a smaller value of $L_i$ and a smaller position number of collided resource units (where $L_i$ is compared first), where $\sum_{i=1}^{n^*} L_i \leq M \cdot \eta,$ and n* is the maximum number that meets the inequality. For option 2, the following remaining collided UEs are the priority UEs that can re-select resources in the idle resource units at the next short-term window, where the select probability of collided UE i is smaller than the pre-configured probability $P_i$, where $P_i = \dfrac{M \cdot \eta}{N1 \cdot L_i},$ and $\sum_{i=1}^{N1} P_i \cdot L_i = M \cdot \eta.$

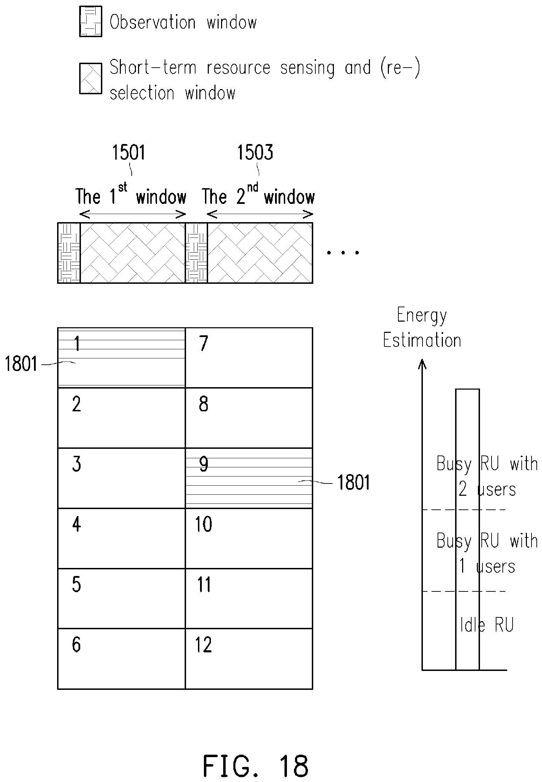

The disclosure provides a short-term resource (re-)sensing and (re-)selection mechanism according to a fourth exemplary embodiment of the disclosure. Referring back to FIG. 13, for examples related to the fourth exemplary embodiment, it is also assumed that the position number of the SCI resource 1301 is {1-12} and the position number of the data resource 1302 subset is {13-30}. FIG. 18 is an example showing resource usage for SCI resource subset according to a fourth exemplary embodiment of the disclosure. Each UE would perform energy measurement to obtain idle SCI resource subset before the beginning of the 1st window, where each UE needs 1 resource unit for SCI resources (i.e. $L_i$=1). In the embodiment, the idle resource subset as shown in FIG. 18 is {2, 3, 4, 5, 6, 7, 8, 10, 11, 12}, and the occupied resource subset is {1, 9} for SCI resources. The SCI idle resource subset can be obtained from conducting an energy measurement or a power measurement. If the energy of a resource unit is less than the pre-configured threshold, then the resource unit is indicated as an idle resource unit. If the energy of a resource unit is equal or larger than the pre-configured threshold, then the resource unit is indicated as a busy resource unit, where the busy resource unit may be an occupied resource unit or a collided resource unit.

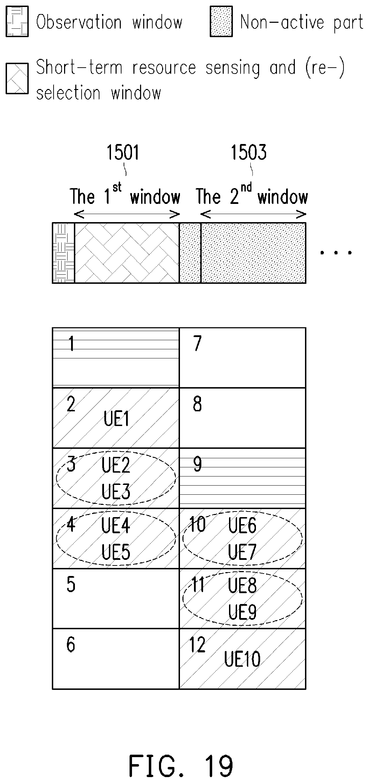

FIG. 19 is an example showing a resource collision for SCI resource subset according to a fourth exemplary embodiment of the disclosure. Each UE would randomly select one idle resource unit from the idle resource subset at the 1st window. In this example, it is assumed that there are 10 UEs randomly select resources. No collision has occurred for UE 1 and UE 10, but collisions have occurred for UE 2~UE 9. These UEs become collided UEs and will reselect resources based on our proposed second priority UE criterion at the 2nd window. The number of the idle resource units and their corresponding locations, the number of occupied resource units which are resource units having no resource collision and their corresponding locations, the number of the collided UEs, and the number of the collided resource units for each collided UE and their corresponding locations would need to be obtained from an energy measurement or a power measurement before the 2nd window. In the example of FIG. 19, the collided resource subset is assumed to be {3, 4, 10, 11} with 4 collided resource units, and the number of collided UEs is 8 (i.e. UE2 ~ UE9), where UE2 and UE3 has 1 collided resource unit at collided resource {3}, UE4 and UE5 has 1 collided resource unit at collided resource {4}, UE6 and UE7 has 1 collided resource unit at collided resource {10}, and UE8 and UE9 has 1 collided resource unit at collided resource {11}. Additionally, the idle resource subset is {5, 6, 7, 8} with 4 idle resource units.

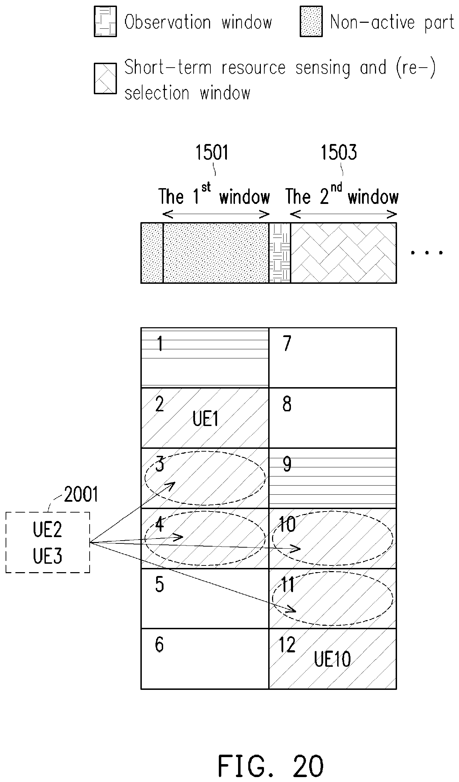

FIG. 20 shows an example of collision mitigation at the second window according to a fourth exemplary embodiment of the disclosure. In the example of FIG. 20, there are 8 collided UEs and 4 collided resource units for the option 1 of the proposed second priority UE criterion in the collided resource part. The collided resource subset 2001 is {3, 4, 10, 11}, and the number of collided UEs is 8. Assuming that N is the number of collided UEs and is equal to 8, and M is the number of collided resource units and is equal to 4. ($L_i$=1 in the case of SCI resources) The number of collided UEs that could select resource from the M (M=4) of the collided resource units is M * $\eta$ = 2, where $\eta$ is a pre-configured threshold, e.g. $\eta$ =0.5, for example. Hence, the 2 collided UEs (i.e., UE2 and UE3) with smaller position number of collided resource unit may randomly select resources from the collided resource subset {3,4,10,11}.

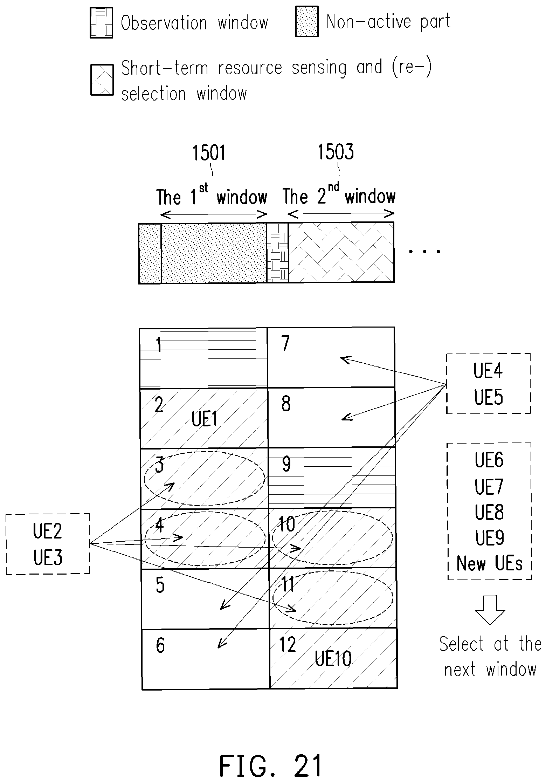

Subsequently, in the example of FIG. 21, there would be 6 remaining collided UEs and 4 idle resource units for the option 1 of the proposed second priority UE criterion in the idle resource part. The number of remaining collided UEs would be 6, and the idle resource subset would be {5, 6, 7, 8}. The number of collided UEs that can select resource from the M (M=4) the idle resource units is M * $\eta$ =2, where $\eta$ is a pre-configured threshold, e.g. $\eta$ =0.5, in this example. Hence, the 2 collided UEs (i.e., UE4 and UE5) with smaller position number of collided resource unit may randomly select resource from the idle resource subset {5,6,7,8}. Then, the other collided UEs (UE6, UE7, UE8, and UE9) and new UEs may select the idle resources at the next window.

The disclosure provides a short-term resource (re-)sensing and (re-)selection mechanism according to a fifth exemplary embodiment of the disclosure. The fifth exemplary embodiment will once again refer to FIGs 18 - 21 for explanations. For the fifth exemplary embodiment, Each UE would perform a power measurement or an energy measurement to obtain idle SCI resource subset before the beginning of the 1st window, where each UE needs 1 resource unit for SCI resources ($L_i$=1). Referring to FIG. 18, the idle resource subset is {2, 3, 4, 5, 6, 7, 8, 10, 11, 12}, and the occupied resource subset is {1, 9} for SCI resources. The SCI idle resource subset could be obtained by conducting an energy measurement or a power measurement. If the energy or power of a resource unit is less than a pre-configured threshold, the resource unit would be indicated as an idle resource unit. If the energy or power of a resource unit is equal or larger than the pre-configured threshold, the resource unit would be indicated as a busy resource unit, where the busy resource unit may be a occupied resource unit or a collided resource unit.

Referring to FIG. 19 as an example showing a resource collision for SCI resource subset according to the fifth exemplary embodiment of the disclosure. For this exemplary embodiment, each UE randomly selects one idle resource unit from the idle resource subset at the 1st window. It is assumed that 10 UEs would random select resources, and no collision would occur for UE 1 and UE 10, but collisions are assumed to have occurred for UE 2~UE 9. These UEs have become collided UEs and may re-select resources based on the second priority UE priority UE criterion at the 2nd window. The number of the idle resource units and their corresponding locations, the number of occupied resource units which are resource units having no resource collision and their corresponding locations, the number of collided UEs, and the number of the collided resource units for each collided UE and their corresponding locations may need to be obtained by conducting power measurement or energy measurement before the 2nd window. In this example, the collided resource subset would be {3, 4, 10, 11} with 4 collided resource units, and the number of collided UEs is 8 (UE2 ~ UE9), where UE2 and UE3 has 1 collided resource unit at collided resource {3}, UE4 and UE5 has 1 collided resource unit at collided resource {4}, UE6 and UE7 has 1 collided resource unit at collided resource {10}, and UE8 and UE9 has 1 collided resource unit at collided resource {11}. Moreover, the idle resource subset is {5, 6, 7, 8} with 4 idle resource units.

Referring to FIG. 20 as an example of collision mitigation at the second window according to the fifth exemplary embodiment of the disclosure. In this example, it is assumed that there are 8 collided UEs and 4 collided resource units, for the option 2 of the proposed second priority UE criterion in the collided resource part. In this example, the collided resource subset would be {3,4,10,11}, and the number of collided UEs would be 8. It is assumed that N is the number of collided UEs which is 8, and M is the number of collided resource units which is 4. ($L_i$=1 in the case of SCI sources). Each collided UE (total 8 collided UEs) may throw a dice or may obtain a random number. If the result is smaller than the pre-configured probability $P_i$, then the collided UE may select resources from the collided resource subset, where the $P_i$ is defined as M * $\eta$ / N=4 * 0.5 / 8 = 1 / 4 and $\eta$ is a pre-configured threshold, e.g. $\eta$ =0.5, in this example. Thus, in average, there will be N * $P_i$= 2 collided UEs (e.g. UE2 and UE3) would select resources from the collided resource subset {3,4,10,11}.

Referring to FIG. 21 as a continuation of FIG. 20. Subsequently, in the example of FIG. 21, there would be 6 remaining collided UEs (i.e., N=6) and 4 idle resource units (i.e., M=4) for the option 2 of the proposed second priority UE criterion in the idle resource part. The number of remaining collided UEs is 6, and the idle resource subset is {5, 6, 7, 8}. Each of remaining 6 collided UEs may throw a dice or obtain a randomly generated number. If the result is smaller than the pre-configured probability $P_i$, then remaining collided UE may select resources from the idle resource subset, where the $P_i$ is M * $\eta$ /N=4*0.5/6=1/3 and $\eta$ is a pre-configured threshold, e.g. $\eta$ =0.5, in this example. Thus, in average, there will be N * $P_i$ = 2 of the remaining 6 collided UEs (e.g. UE4 and UE5) may select resources from the idle resource subset {5,6,7,8}. Then, the other collided UEs (UE6, UE7, UE8, and UE9) and new UEs may select the idle resources at the next window.

In view of the aforementioned descriptions, the present disclosure is suitable for being used in a mobile wireless device operating under NR V2X mode 2 and is able to reduce the latency and to minimize the impact associated with resource collision when coping with aperiodic traffic.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of" followed by a listing of a plurality of items and/or a plurality of categories of items, as used herein, are intended to include "any of", "any combination of", "any multiple of", and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1.  A resource sensing and selecting method used by a user equipment (UE) newly entering a network and operating under new radio vehicle-to-everything (NR V2X) mode 2, the method comprising:

    receiving aperiodic data traffic (S401);
    obtaining resource usage information of a resource pool before a first short-term window (611) (S402);
    determining collided UEs from the resource usage information (S403);
    determining whether the collided UEs have sufficient resource units (S404);
    selecting no resource within the first short-term window when the collided UEs lack sufficient resource units and waiting for a second short-term window (612) (S405); and
    selecting, in a random manner, an idle resource unit from the resource pool at the first short-term window (611) when the collided UEs have sufficient resources (S406).

2.  The method of claim 1, wherein obtaining resource usage information comprising:

    performing an energy measurement or a power measurement of the resource pool to obtain the resource usage information; or
    receiving a sidelink control information (SCI) in a physical sidelink control channel (PSCCH) to obtain the resource usage information.

3.  The method of claim 1, wherein the resource usage information comprising:

    a quantity and a location of idle resource units;
    a quantity and a location of occupied resource units which are resource units having no resource collision;
    a quantity of the collided UEs which have selected collided resource units which are resource units having resource collisions; and
    a quantity and a location of the collided resource units for each collided UE.

4.  The method of claim 1, wherein determining whether the collided UEs have sufficient resource units comprising: determining whether a total required resources for all collided UEs is less than a threshold which is M * $\eta$, wherein M is a sum of idle resource units and collided resource units, $\eta$ is 1 when a priority order of all collided UEs is distinguished, and $\eta$ is a pre-configured value between 0 and 1 when the priority order of all collided UEs is not distinguished.

5.  The method of claim 1, wherein selecting no resource within the first short-term window (611) when the collided UEs lack sufficient resource units and waiting for a second window (612) further comprising:

    stop transmitting when a number of times of waiting is greater than Q1 which is a pre-configured integer greater than 0; and
    keep obtaining the resource usage information, determining collided UEs from the resource usage information, determining whether the collided UEs have sufficient resource units, and determining whether to select resources from the resource pool when the number of times of waiting is less than or equal to Q1.

6.  The method of claim 1, wherein selecting, in the random manner, an idle resource unit from the resource pool at the first short-term window (611) when the collided UEs have sufficient resources further comprising:

determining whether the idle resource unit which has been selected has collided;
using the idle resource unit which has been selected to perform a transmission when the idle resource unit has not collided; and
releasing the idle resource unit after the transmission is finished.

7. The method of claim 6 further comprising:
obtaining continuously the resource usage information when the idle resource unit has been determined to have collided.

8. The method of claim 1, wherein a first observation window is inserted before the first short-term window 901 and the first observation window and the first short-term window 901 overlap with a resource selection window 902 but does not overlap with a long-term resource sensing window 903.

9. The method of claim 1, wherein a first observation window 1002 is inserted before the first short-term window 1003 and the first observation window 1002 and the first short-term window overlap 1003 with a resource selection window 1001 and overlap with a long-term resource sensing window 1006.

10. A user equipment (UE) comprising:

a transceiver (502); and
a processor (501) coupled to the transceiver (502) and configured to:

receive, by using the transceiver, aperiodic data traffic;
obtain resource usage information of a resource pool before a first short-term window;
determine collided UEs from the resource usage information;
determine whether the collided UEs have sufficient resource units;
select no resource within the first short-term window when the collided UEs lack sufficient resource units and waiting for a second short-term window; and
select, in a random manner, an idle resource unit from the resource pool at the first short-term window when the collided UEs have sufficient resources.

11. A resource sensing and selecting method used by a user equipment (UE) and operating under new radio vehicle-to-everything (NR V2X) mode 2 and has experienced a resource collision, the method comprising:

receiving aperiodic traffic and experiencing the resource collision of a first resource unit during a first short-term window (611) (S411);
releasing the first resource unit and obtaining resource usage information of a resource pool before a second short-term window (612) (S412);
determining whether to re-select the first resource unit or a second resource unit which is an idle resource from the resource pool during the second short-term window (612) by determining whether a first priority UE criterion or a second priority UE criterion is met (S413);
ceasing to re-select the first resource unit or the second resource unit from the resource pool during the second short-term window (612) in response to having determined that neither the first priority UE criterion nor the second priority UE criterion has been met and waiting for a third short-term window (613) (S414); and
re-selecting the first resource unit or the second resource unit randomly or by a pre-configured policy from the resource pool during the second short-term window (612) in response to having determined that either the first priority UE criterion or the second priority UE criterion has been met (S415).

12. The method of claim 11, wherein obtaining resource usage information comprising:

performing an energy measurement or a power measurement of the resource pool to obtain the resource usage information; or
receiving a sidelink control information (SCI) in a physical sidelink control channel (PSCCH) to obtain the resource usage information.

13. The method of claim 11, wherein the resource usage information comprising:

a quantity and a location of idle resource units;

a quantity and a location of occupied resource units which are resource units having no resource collision;
a quantity of the collided UEs which have selected collided resource units which are resource units having resource collisions; and
a quantity and a location of the collided resource units for each collided UE.

14. The method of claim 11, wherein determining whether to re-select the first resource or a second resource unit which is the idle resource from the resource pool during the second short-term window by determining whether the first priority UE criterion or the second priority UE criterion is met comprising:

determining whether to re-select the first resource unit or the second resource unit which is the idle resource from the resource pool during the second short-term (612) window by determining whether the first priority UE criterion is met when a priority order of all collided UEs is distinguished; or
determining whether to re-select the first resource unit or the second resource unit which is the idle resource from the resource pool during the second short-term window (612) by determining whether the second priority UE criterion is met when the priority order of all collided UEs is not distinguished.

15. The method of claim 14, wherein re-selecting the first resource unit or the second resource unit which is the idle resource from the resource pool during the second short-term (612) window comprising:

re-selecting the first resource unit or the second resource unit in response to having determined that the priority order of all collided UEs is distinguished and a total number of required resources for a first n* UEs having a higher priority order is less than a threshold M, wherein M is a sum of idle resource units and collided resource units, and n* is the maximum number of the collided UEs that met the first priority UE criterion; and
determining whether the first priority UE criterion is met according to whether the UE belongs to the first n* UEs.

16. The method of claim 15 further comprising:
determining the priority order according to:

a priority indicator indicating a collided UE having a priority order;
a collision indicator indicating a number of times of resource collisions for the collided UE;
an indicator of a number of collided resource units for the collided UE; and
an indicator of a position number of a selected collided resource(s) for the collided UE.

17. The method of claim 14, wherein determining whether to re-select the first resource unit or the second resource unit which is the idle resource from the resource pool during the second short-term window (612) by determining whether the second priority UE criterion is met when the priority order of all collided UEs is not distinguished further comprising:
determining whether the second priority UE criterion is met according to whether the UE belongs to a first n* UEs with smaller value of $L_i$ and a smaller position number of collided resource units that meets $\sum_{i=1}^{n^*} L_i \le M \cdot \eta$, wherein $L_i$ is a number of collided resource units for a collided UE $i$, M is a number of released selected collided resource units or idle resource units, and $\eta$ is a pre-configured value between 0 and 1, n* is the maximum number that meets the second priority UE criterion.

18. The method of claim 14, wherein determining whether to re-select the first resource unit or the second resource unit which is the idle resource from the resource pool during the second short-term window (612) by determining whether the second priority UE criterion is met when the priority order of all collided UEs is not distinguished further comprising:
determining whether the second priority UE criterion is met according to whether a select probability of the UE is smaller than a pre-configured probability Pi wherein $P_i = \dfrac{M \cdot \eta}{N \cdot L_i}$ , $L_i$ is a number of collided resource units for a collided UE $i$, N is a number of collided UEs, M is a number of released selected collided resource units or idle resource units, and $\eta$ is a pre-configured value between 0 and 1.

19. The method of claim 11, wherein ceasing to re-select the first resource unit or the second resource unit from the resource pool during the second short-term window (612) in response to having determined that neither the first priority UE criterion nor the second priority UE criterion has been met and waiting for a third short-term window further comprising:

stop transmitting when a number of times of waiting is greater than Q1 which is a pre-configured integer greater than 0; and

keep obtaining the resource usage information, determining collided UEs from the resource usage information, determining whether the collided UEs have sufficient resource units, and determining whether to select a resource from the resource pool or not when the number of times of waiting is less than or equal to Q1.

20. The method of claim 11, wherein re-selecting the first resource unit or the second resource unit randomly or by a pre-configured policy from the resource pool during the second short-term window (612) in response to having determined that either the first priority UE criterion or the second priority UE criterion has been met further comprising:

re-selecting the first resource unit or the second resource unit by the pre-configured policy from the resource pool during the second short-term window (612) in response to having determined that the first priority UE criterion has been met, wherein re-selecting resource(s) by the pre-configured policy is according to first priority UE criterion; and

re-selecting the first resource unit or the second resource unit randomly and by the pre-configured policy from the resource pool during the second short-term window (612) in response to having determined that the second priority UE criterion has been met, wherein re-selecting resource(s) randomly and by the pre-configured policy is according to second priority UE criterion.

21. The method of claim 20 further comprising:

determining whether the first resource unit or the second resource unit which has been selected has collided; using the first resource unit or the second resource unit which has been selected to perform a transmission when the first resource unit or the second resource unit has not collided; and releasing the first resource unit or the second resource unit after the transmission is finished.

22. The method of claim 21 further comprising:

determined whether a quantity of collisions exceeds Q2 in response to having determined that the first resource unit or the second resource unit which has been selected has collided, wherein Q2 is a pre-configured number; and

ceasing to transmit in response to having determined that the quantity of collisions has exceeded Q2; and continuing to release the selected collided resource, obtain the resource usage information, and determine a selecting resource from the resource pool in response to having determined that the quantity of collisions is less than or equal to Q2.

23. The method of claim 11, wherein a second observation window is inserted before the second short-term window 901 and the second observation window and the second short-term window 901 overlap with a resource (re-) selection window 902 but does not overlap with a long-term resource sensing window 903.

24. The method of claim 11, wherein a second observation window 1002 is inserted before the second short-term window 1003 and the second observation window 1002 and the second short-term window 1003 overlap with a resource selection window 1001 and overlap with a long-term resource sensing window 1006.

FIG. 1

100

101 Synchronization → 102 Schedule Assignment → 103 Data Transmission /Reception

FIG. 2

201 Sensing Window

202 Resource (Re-) selection Window

n−1000

n−1

n

n+T_1

n+T_2

1000ms

$T_1 < 4ms$

$20ms \leq T_2 \leq 100ms$

FIG. 3

receive aperiodic data traffic —S401

obtain resource usage information of a resource pool before a first short-term window —S402

determine collided UEs from the resource usage information —S403

determine whether the collided UEs have sufficient resource units —S404

select no resource within the first short-term window when the collided UEs lack sufficient resource units and waiting —S405

select, in a random manner, an idle resource unit from the resource pool at the first short-term window when the collided UEs have sufficient resources —S406

FIG. 4A

receive aperiodic traffic and experience the resource collision of a first resource unit during a first short-term window ~S411

release the first resource unit and obtain resource usage information of a resource pool before a second short-term window ~S412

determine whether to re-select the first resource unit or a second resource unit which is an idle resource from the resource pool during the second short-term window by determining whether a first priority UE criterion or a second priority UE criterion is met ~S413

cease to re-select the first resource unit or the second resource unit from the resource pool during the second short-term window in response to having determined that neither the first priority UE criterion nor the second priority UE criterion has been met and waiting for a third short-term window ~S414

re-select the first resource unit or the second source unit randomly or by a pre-configured policy from the resource pool during the second short-term window in response to having determined that either the first priority UE criterion or the second priority UE criterion has been met ~S415

FIG. 4B

User
Interface

501

Processor

Storage
medium

Antenna

Transmitter and
Receiver

502

## FIG. 5

601        602

| 0 | N | N+T1 | N+T2 | N+T3 | N+T4 | N+T5 |

· · · | SCI | Data | Observ | SCI | Data | Observ | SCI | Data | · · ·

611        612        613

| SCI | Data |

600

FIG. 6

601

602

0    N    N+T1    N+T2    N+T3    N+T4    N+T5

| SCI | Data | Observ | SCI | Data | Observ | SCI | Data |

611    612    613

701    702

| SCI | Data |

600

FIG. 7

601    602

0    N    N+T1    N+T2    N+T3    N+T4    N+T5

| SCI | Data | Observ | SCI | Data | Observ | SCI | Data |

611    612    613

802

| SCI | Data |

801

600

FIG. 8A

601 602

0    N    N+T1    N+T2    N+T3    N+T4    N+T5

| SCI | Data | Observ | SCI | Data | Observ | SCI | Data |

611    612    613

811    812

SCI    Data

600

FIG. 8B

EP 3 751 948 A2

| 903 | 902 | | | |
|---|---|---|---|---|
| Resource Sensing | Resource selection | Resource re-sensing | Resource re-selection | . . . |

901

. . .

⊟ Observation window

▨ Short-term resource sensing and (re-)selection window

FIG. 9

FIG. 10

EP 3 751 948 A2

Aperiodic traffic occurs for a
new NR V2X mode 2UE

START — S1101

S1102
Obtain resource information before the first
short-term window

S1103
Is the
number of total required
resources for all collided UEs less than
a threshold M*$\eta$?

No → 

S1106
Wait for the
next
short-term
window

S1107
Is the
number of
waiting times
more than
"Q1"?

No →

Yes ↓

STOP

Yes →

S1104
Randomly select resources in the idle resources
at the first short-term window

S1105
Are the
selected resources
collided?

No → Use the
selected
resources to
transmit
aperiodic
traffic

Yes ↓

Become a collided UE and obtain resource
information before the second short-term window

FIG. 11

Re-select resources at the second short-term
period for a collided NR V2X mode 2 UE
when aperiodic traffic occurs

S1201 — START

S1202
Release the collided resources and obtain resource
information before the second short-term window

S1203
Does the
collided UE meet the proposed
first or second priority UE criterion and become a
priority UE that can re-select
resources?

No →

S1207
Wait for the
next
short-term
window

S1208
Is the
number of
waiting times
more than
"Q1"?

No →

Go to START of
Embodiment 1

Yes
STOP

Yes ↓

S1204
Re-select resources randomly and/or by policy at
the second short-term window

S1205
Are the
selected resources
collided?

Yes →

S1206
Is the
number of
collided times more
than "Q2"?

No

No ↓
Use the selected resources to
transmit aperiodic traffic

Yes ↓
STOP

FIG. 12

EP 3 751 948 A2

|  1301 | | 1302 | | |
| --- | --- | --- | --- | --- |
| 1 | 7 | 13 | 19 | 25 |
| 2 | 8 | 14 | 20 | 26 |
| 3 | 9 | 15 | 21 | 27 |
| 4 | 10 | 16 | 22 | 28 |
| 5 | 11 | 17 | 23 | 29 |
| 6 | 12 | 18 | 24 | 30 |

FIG. 13

☐ Observation window

☐ Short-term resource sensing and (re-) selection window

1401

The 1st window    The 2nd window

| 13 | 19 | 25 |
|----|----|----|
| 14 | 20 | 26 |
| 15 | 21 | 27 |
| 16 | 22 | 28 |
| 17 | 23 | 29 |
| 18 | 24 | 30 |

1402

FIG. 14

Legend:
- ▤ Observation window
- ▨ Non-active part
- ▧ Short-term resource sensing and (re-) selection window

1501 — The 1st window
1503 — The 2nd window

| 13 | 19 UE4 | 25 UE4 |
|----|--------|--------|
| 14 | 20 | 26 UE1 |
| 15 UE5 | 21 | 27 |
| 16 UE5 | 22 | 28 UE2 UE3 — 1502 |
| 17 UE5 UE6 | 23 UE6 | 29 UE3 |
| 18 UE5 UE6 | 24 UE6 | 30 |

1502

FIG. 15

FIG. 16

FIG. 17

Observation window

Short-term resource sensing and (re-) selection window

1501                    1503

The 1<sup>st</sup> window   The 2<sup>nd</sup> window

1801

1801

Energy
Estimation

Busy RU with
2 users

Busy RU with
1 users

Idle RU

FIG. 18

☐ Observation window    ☒ Non-active part

☒ Short-term resource sensing and (re-)
selection window

1501          1503

The 1st window   The 2nd window

| 1 | 7 |
|---|---|
| 2    UE1 | 8 |
| 3   UE2   UE3 | 9 |
| 4   UE4   UE5 | 10   UE6   UE7 |
| 5 | 11   UE8   UE9 |
| 6 | 12   UE10 |

FIG. 19

FIG. 20

□ Observation window    ▨ Non-active part

□ Short-term resource sensing and (re-) selection window

1501                1503

The 1st window    The 2nd window

FIG. 21